# EUROPEAN PATENT APPLICATION

(11) **EP 2 184 484 A1**
(43) Date of publication of application: **12.05.2010**
(21) Application number: 09174503.4
(22) Date of filing: 29.10.2009
(51) Int. Cl.: F03D 3/06

(54) **Wind-power generator**

(30) Priority: 06.11.2008 IT PD20080323
(71) Applicant: Enervolt S.R.L, 35040 Megliadino San Fidenzio PD (IT)
(72) Inventor: Settimo, Eliseo, 30032 Fiesso d`Artico (VE) (IT)
(74) Representative: Modiano, Micaela Nadia

(57) **Abstract**

A wind-power generator (10) particularly of the type with a turbine with blades to be arranged with a vertical axis, which comprises a synchronous three-phase permanent-magnet electric power generator (11) which is operatively connected to a wind turbine (12) with at least three elongated blades (13) arranged around an axis of rotation (A), the transverse profile of the blades (13) having a first curved portion (14) for capturing an air stream in order to perform its propulsive action, and a second curved portion (15) that extends continuously from the first curved portion (14) proximately to the rotation axis (A). The second curved portion (15) has a curvature which is the inverse of, and larger than, the curvature of the first curved portion (14), so as to promote the propulsive aerodynamic action of the air stream that strikes the blades (13).

## Description

The present invention relates to a wind-power generator.

The most disparate devices adapted to generate an effect that is useful to man by utilizing wind power have been known since antiquity.

Among these devices there are windmills, which utilize the mechanical rotational energy of a rotor with radial blades that is moved by the wind.

Current wind-power generators with a propeller-like rotor propose this concept in a technically evolved form.

In these wind-power generators, a propeller-like rotor provided with a small number of blades with a wing-like profile, generally two to four blades, with a large longitudinal extension, drives an alternator that is adapted to generate electric current.

One drawback of these generators is that even when the propeller-like rotor is properly directed toward the wind, the natural instability of the air flow of the wind induces an incidence with the blades that is rarely optimal, causing noisy turbulence, particularly at the radial ends of the blades, which move at high speed.

Vertical-axis wind-power generators are currently also known which are generally provided with a turbine having two elongated curved blades which are arranged longitudinally so as to wrap helically around each other.

As is known, with respect to propeller-type wind-power generators, the main advantages of this solution consist in that it does not require orientation of the rotor for correct operation and is far less noisy than propeller-type wind-power generators.

In the field of wind-power generators, and in particular in the field of vertical-axis wind-power generators, a pressure toward continual improvement of the efficiency of utilization of the energy of the air stream that strikes the generator is particularly felt.

The aim of the present invention is to provide a wind-power generator that makes it possible to achieve higher efficiency in the utilization of wind power than currently known vertical-axis wind-power generators with equal space occupation.

Within this aim, an object of the invention is to propose a wind-power generator that is structurally simple and easy to use and can be manufactured at low cost.

This aim, as well as these and other objects that will become better apparent hereinafter, are achieved by a wind-power generator particularly of the type with a turbine with blades to be arranged with a vertical axis, **characterized in that** it comprises a synchronous three-phase permanent-magnet electric generator which is operatively connected to a wind turbine which comprises at least three elongated blades arranged around an axis of rotation of said turbine, the transverse profile of said blades having a first curved portion for capturing an air stream in order to perform its propulsive action, and a second curved portion that extends continuously from said first curved portion proximately to said rotation axis, said second curved portion having a curvature which is the inverse of, and larger than, the curvature of said first curved portion, so as to promote the propulsive aerodynamic action of said air stream on said blades.

Further characteristics and advantages of the invention will become better apparent from the following detailed description of a preferred but not exclusive embodiment of the wind-power generator according to the invention, illustrated by way of non-limiting example in the accompanying drawings, wherein:

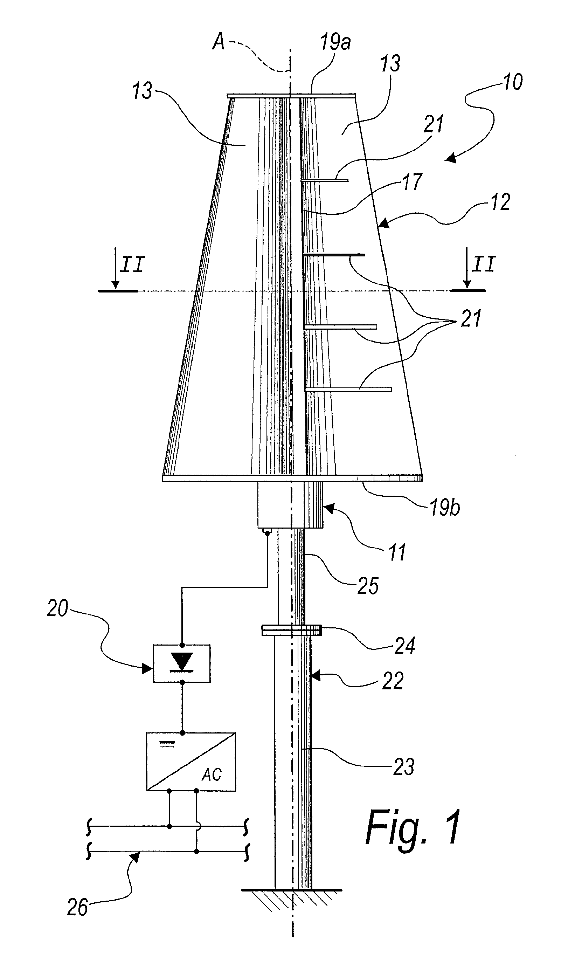

Figure 1 is a front elevation view of a wind-power generator according to the invention;

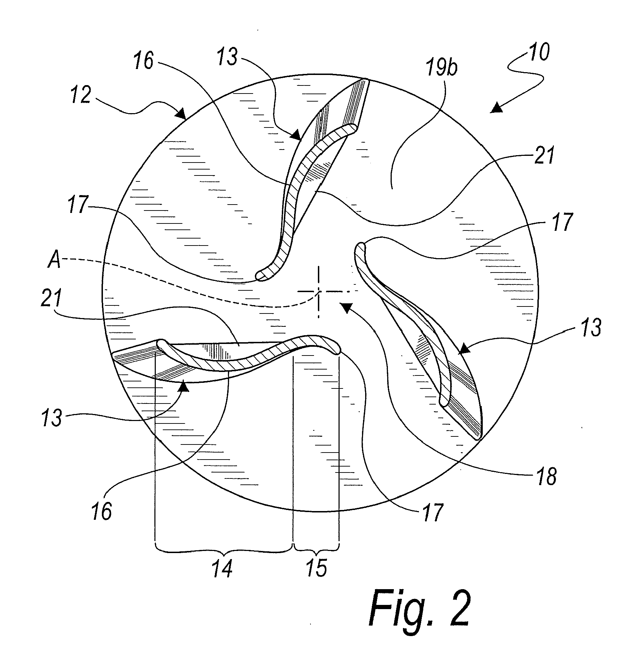

Figure 2 is a sectional view of the wind-power generator according to the invention, taken along the line II-II of Figure 1.

It is noted that anything found to be already known during the patenting process is understood not to be claimed and to be the subject of a disclaimer.

With reference to the figures, the reference numeral 10 generally designates a wind-power generator particularly of the type with a turbine with blades to be arranged with a vertical axis, which has a particularity in that it comprises an electric power generator 11, preferably of the synchronous three-phase permanent-magnet type, which is functionally connected to a wind turbine 12 with three elongated blades 13 arranged around an axis of rotation A thereof.

Conveniently, in alternative embodiments of a wind-power generator according to the invention the wind turbine has more than three of such blades depending on the specific construction requirements.

The transverse profile of the blades 13 has a first curved portion 14 and a second curved portion 15.

The first curved portion 14 is advantageously larger than the second curved portion 15 and is adapted to capture an air stream that strikes the wind turbine 12 for performing its propulsive action.

The second curved portion 15 extends continuously from the first curved portion 14, approaching the rotation axis A of the wind turbine 12, and has a curvature which is the inverse of, and larger than, the curvature of the first curved portion 14.

In this manner, the aerodynamic effect of the second curved portion 15 tends to delay the separation of the boundary layer from the back 16 of the blades 13, enhancing the aerodynamic propulsive action of the air stream on the blades 13.

Thus, the redirection of the air stream that strikes one blade 13, induced by the second curved portion 15, causes a difference in pressure between its two faces which is greater than the difference that would act on a blade that had a second straight, non-curved portion.

This difference in pressure, as is well-known, becomes apparent as the driving moment that actuates the wind turbine 12.

Preferably, internal edges 17 of the blades 13, which correspond to the second curved portion 15 of the profile of the blades 13, are parallel to the axis of rotation A and proximate thereto, a free space 18 for the outward flow of the air being formed between them.

In particular, the blades 13 taper vertically, i.e., the extension of their transverse cross-section decreases with substantial continuity along their vertical longitudinal extension.

Conveniently, there are two blade supporting plates 19a and 19b, which are jointly connected to the blades 13 at their opposite ends.

Moreover, an inverter 20 is conveniently provided, which is adapted to convert the electric power generated by the electric power generator 11 into electric power for commercial use.

Cross-members 21 for stiffening the blades 13 are connected transversely to them at the first curved portion 14 of their profile and are adapted to prevent their warping.

Conveniently, the electric power generator 11 is arranged at the top of a supporting structure 22, which comprises a tubular supporting element 23 for a coupling flange 24 for a supporting shaft 25 of the wind turbine 12.

The electric power generator 11 advantageously has a hollow shaft, not shown in the accompanying figures, in which the shaft of the wind turbine 12, also not shown in the accompanying figures, is accommodated, to the full advantage of the structural strength of this connection.

The blades 13 are conveniently made of materials selected among stainless steel, painted steel plates and fiberglass reinforced plastic laminations, or other composite materials, depending on the environments of application.

The operation of a wind-power generator according to the invention is as follows.

When the wind turbine 12 is immersed in an air stream of sufficient intensity, the aerodynamic action of such stream on the blades 13 imparts a rotary propulsive moment to them.

The rotor of the electric power generator 11 is thus entrained rotationally by the wind turbine 12 and induces an alternating electric current whose phase depends on the rotation rate of the wind turbine 12.

The inverter 20 converts this current into a current for commercial use, such as for example an alternating current at 220 V and 50 Hz, in compliance with the parameters generally defined for an electrical grid 26, to which it is connected.

The inverter 20 is designed to work in a voltage range, beyond the limits of which it is disconnected from the electric power generator 11.

In practice it has been found that the invention achieves the intended aim and objects, providing a wind-power generator that makes it possible to achieve higher efficiency in the utilization of wind power than currently known vertical axis wind-power generators, with equal space occupation, due to the particular shape with double inverse curvature of the profile of the blades.

Moreover, a wind-power generator according to the invention is structurally simpler than currently known vertical axis wind-power generators and is further easy to install and use.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2008A000323 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A wind-power generator particularly of the type with a turbine with blades to be arranged with a vertical axis, **characterized in that** it comprises an electric power generator (11) which is functionally connected to a wind turbine (12) comprising at least three elongated blades (13) arranged around an axis of rotation (A) of said wind turbine (12), the transverse profile of said blades (13) having a first curved portion (14) for capturing an air stream in order to perform its propulsive action, and a second curved portion (15) that extends continuously from said first curved portion (14) to the vicinity of said rotation axis (A), said second curved portion (15) having a curvature which is the inverse of, and is larger than, the curvature of said first curved portion (14), so as to promote the propulsive aerodynamic action of said air stream on said blades (13).

2. The wind-power generator according to claim 1, **characterized in that** internal edges (17) of said blades (13), which correspond to said second curved portion (15) of said profile, are parallel to said rotation axis (A) and proximate thereto, a free space (18) for the outward flow of the air being formed between them.

3. The wind-power generator according to claim 1, **characterized in that** the extension of the transverse cross-section of said blades (13) decreases with substantial continuity along their longitudinal extension.

4. The wind-power generator according to claim 1, **characterized in that** it comprises two blade supporting plates (19a, 19b), which are jointly connected to said blades (13) at their opposite ends.

5. The wind-power generator according to claim 1, **characterized in that** it comprises an inverter (20), which is adapted to convert the electric power generated by said electric power generator (11) into electric power for commercial use.

6. The wind-power generator according to claim 1, **characterized in that** it comprises cross-members (21) for stiffening said blades (13) which are connected transversely to them at said first curved portion (14) of said profile.

7. The wind-power generator according to claim 1, **characterized in that** said electric power generator (11) is a three-phase permanent-magnet synchronous generator.
